Europäisches Patentamt

European Patent Office

Office européen des brevets

(19)

(11) Publication number: **0 156 567**
**B1**

(12) **EUROPEAN PATENT SPECIFICATION**

(45) Date of publication of patent specification: **23.11.88**

(51) Int. Cl.⁴: **F 16 H 55/44,** B 21 D 53/26

(21) Application number: **85301600.4**

(22) Date of filing: **07.03.85**

(54) **Poly-V pulley formed of sheet metal and method and apparatus for making the same.**

(30) Priority: **07.03.84 JP 42000/84**

(43) Date of publication of application:
**02.10.85 Bulletin 85/40**

(45) Publication of the grant of the patent:
**23.11.88 Bulletin 88/47**

(84) Designated Contracting States:
**DE FR GB IT**

(56) References cited:
**EP-A-0 083 684**
**FR-A-2 470 308**
**FR-A-2 507 931**
**JP-A-59 215 222**
**US-A-1 705 931**
**US-A-3 977 264**
**US-A-4 131 032**
**US-A-4 273 547**

(73) Proprietor: **HONDA GIKEN KOGYO KABUSHIKI KAISHA**
**27-8, Jingumae, 6-chome**
**Shibuya-ku, Tokyo 150 (JP)**
(73) Proprietor: **SANSHU PURESHU KOGYO KABUSHIKI KAISHA**
**2-6-8, Kayaba-cho Nihonbashi Chuo-ku**
**Tokyo (JP)**

(72) Inventor: **Tanaka, Haruma**
**2-9-48, Hanezawa**
**Fujimi-shi Saitama (JP)**
Inventor: **Ohashi, Yasuo**
**2-26-25, Tsuruse**
**Fujimi-shi Saitama (JP)**

(74) Representative: **Leale, Robin George et al**
**FRANK B. DEHN & CO. Imperial House 15-19**
**Kingsway**
**London WC2B 6UZ (GB)**

Courier Press, Leamington Spa, England.

# Description

This invention relaties to a poly-V pulley formed in a predetermined shape by plastic working of sheet material, as well as a method and apparatus for making the same.

Poly-V pulleys have been manufactured mainly by machining processes, but for pulleys used in large quantities there have been attempts to use manufacturing methods which utilize plastic working of a sheet metal blank. Such methods of making a poly-V pulley by plastic working of sheet metal are fairly advanced, but still unsatisfactory from the point of view of accuracy of the V groove portion. Two such methods and the resultant pulleys are shown in U.S. Patents Nos. 3,977,264 (Sproul) and 4,273,547 (Bytzek).

EP—A—0083684 discloses a poly-V pulley formed by plastic working of sheet metal, comprising a radially thickened cylindrical wall portion having poly-V grooves formed on the external surface thereof opposite said poly-V grooves for causing forming and retention of the desired shape and dimensions of said poly-V grooves.

Viewed from respectively different aspects, the present invention provides a poly-V pulley as claimed in claim 1, a method of forming a poly-V pulley as claimed in claim 4, and apparatus for forming a poly-V pulley as claimed in claim 10.

An embodiment of the invention will now be described by way of example and with reference to the accompanying drawings, wherein:

Fig. 1 is a sectional elevation view, taken substantially on the line I—I in Fig. 2, of a poly-V pulley according to the present invention;

Fig. 2 is an end elevation view of the poly-V pulley of Fig. 1, with a portion in section taken substantially on the line II—II in Fig. 1;

Figs. 3 to 6 are sectional elevation views similar to Fig. 1 illustrating the shape of the pulley work piece during the successive steps of a forming method according the invention;

Fig. 7 is an enlarged fragmentary sectional elevation view of a forming apparatus according to the invention, illustrating by solid and phantom lines the start and finish of a cylinder thickening step used in the aforesaid method;

Fig. 8 is a sectional elevation view of the forming apparatus illustrating on opposite sides of the centre line B the start and finish of the cylinder thickening step of the method as also illustrated in Fig. 7;

Fig. 9 is a sectional plan view of a split die, with the die elements shown in elevation, of apparatus for radially restraining the sheet metal during the cylinder thickening step illustrated in Figs. 7 and 8;

Fig. 10 is an enlarged fragmentary view of a portion of Fig. 9;

Figs. 11 and 12 are sectional elevation views of forming apparatus according to the invention illustrating successive positions during a rolling die form step, with the left side of Fig. 11 showing the starting condition, Fig. 12 showing an intermediate condition during forming, and the right side of Fig. 11 illustrating the finished condition as well as the rolling die arrangement;

Fig. 13 is a diagrammatic illustration of a rolling die forming step, illustrating the tendencies normally caused by such forming; and

Fig. 14 is an enlarged fragmentary sectional elevation view, with the cross-hatching omitted for clarity, of a poly-V pulley according to the invention with phantom lines illustrating the undesirable shape that would occur without the use of certain features of the present invention.

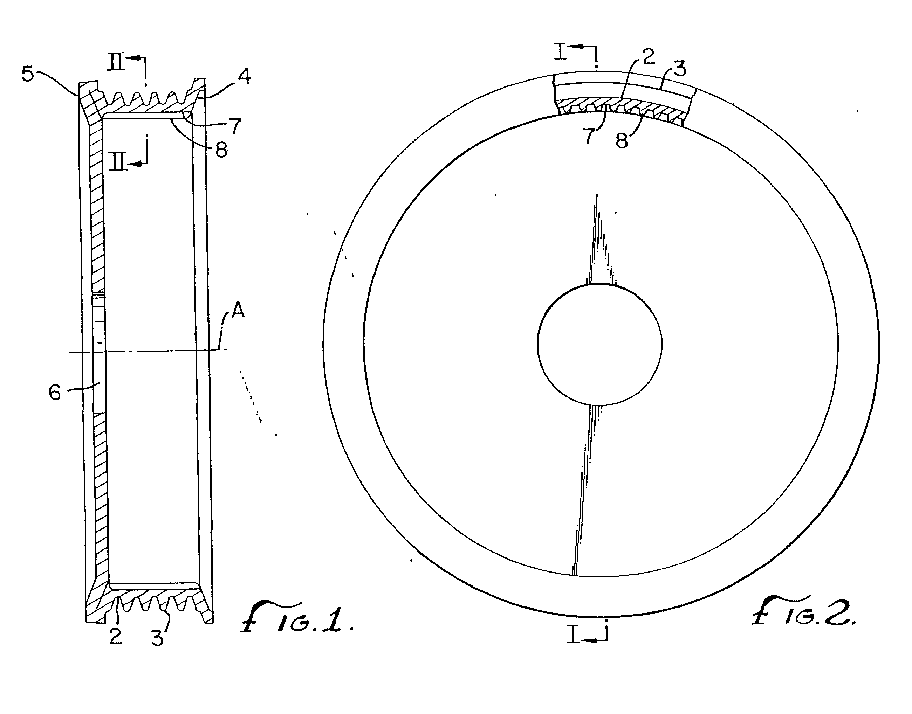

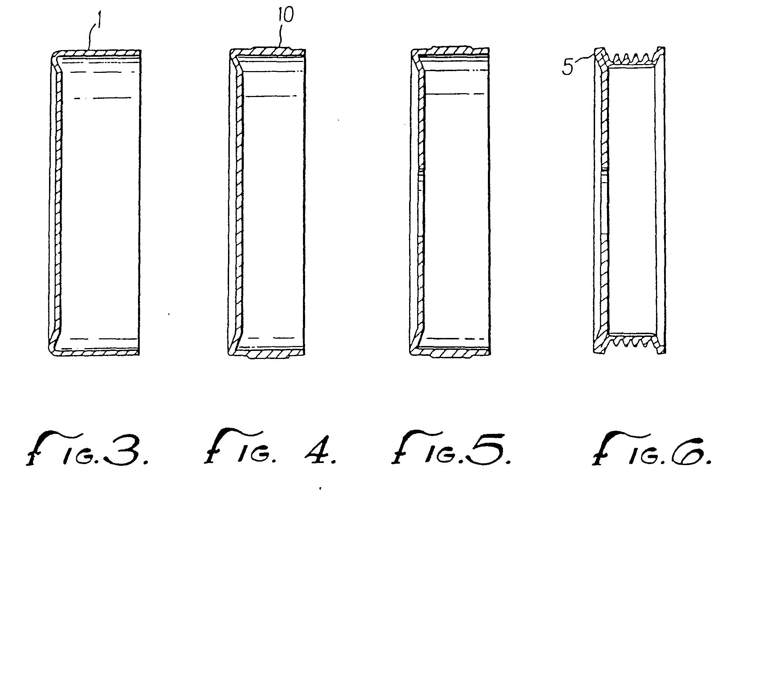

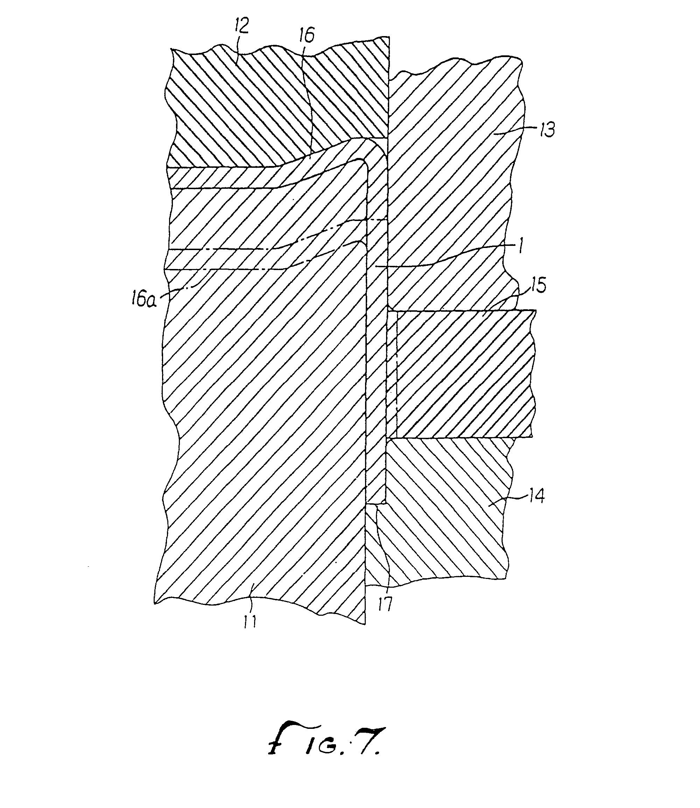

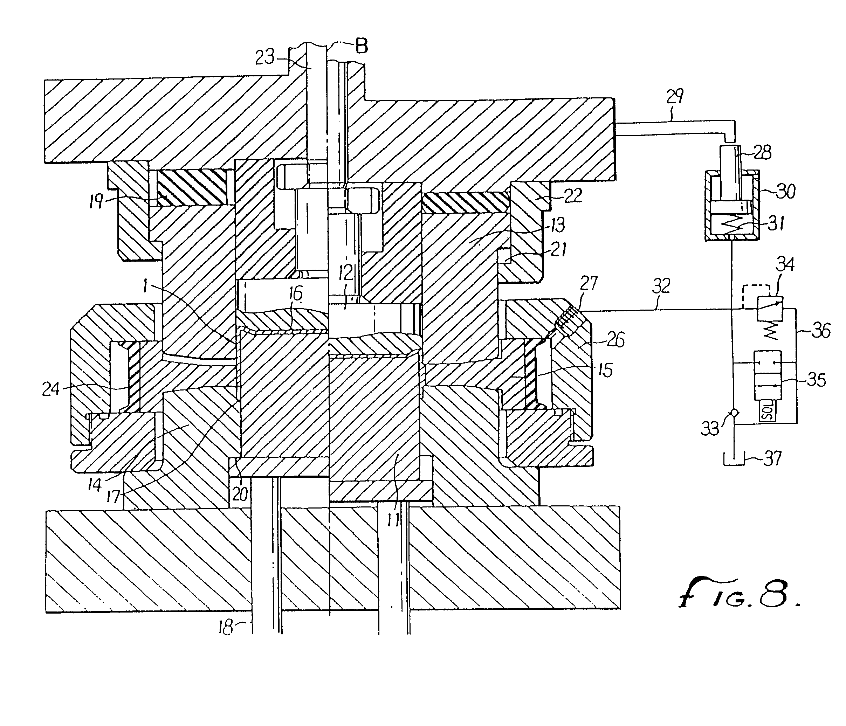

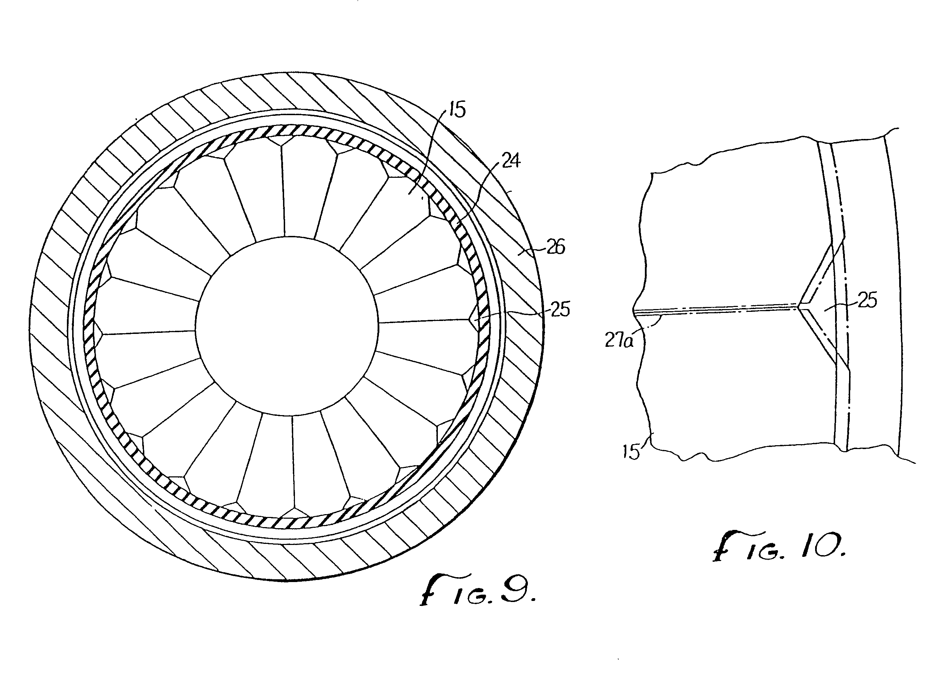

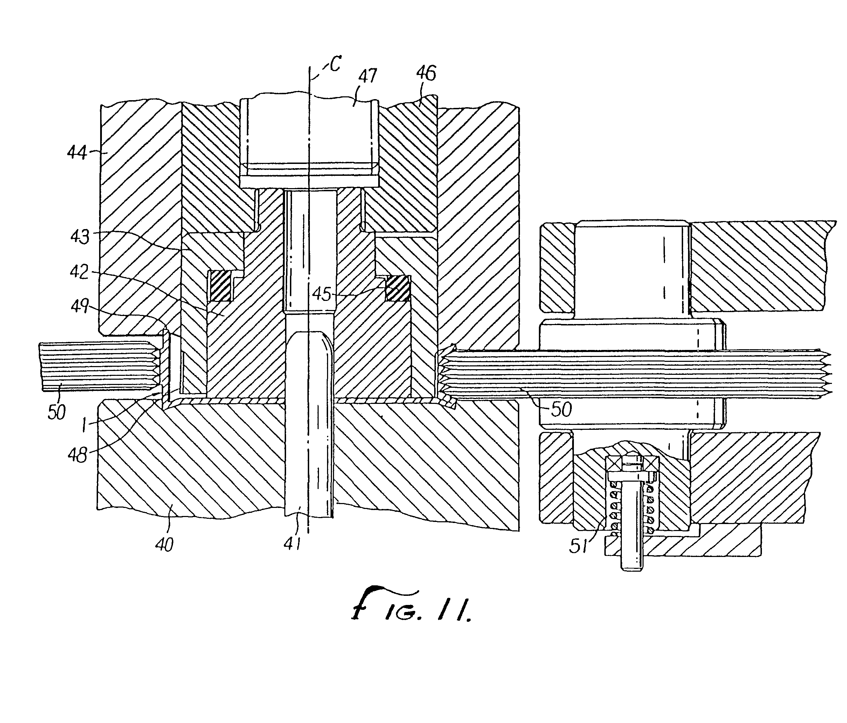

Referring first to Fig. 1, there is shown a sectional elevation view of the poly-V pulley according to one embodiment of the present invention, in which the pulley is formed of a single sheet of metal. Its cylindrical wall portion has many V grooves 2, and at the respective ends of the cylindrical portion are formed a first flange portion 4 having an outside diameter larger than that of the peaks of protrusions 3 between the V grooves, and a second flange portion 5. The central portion, contiguous with the flange portion 5, is a disc having a central hole 6. Actually, the disc normally also has plural bolt holes formed in its outer periphery, and in many cases further holes are formed for the reduction of weight. Substantially cup-shaped pulleys with a disc portion of this general configuration are well known, this being the usual shape of a pulley formed of a single sheet of metal.

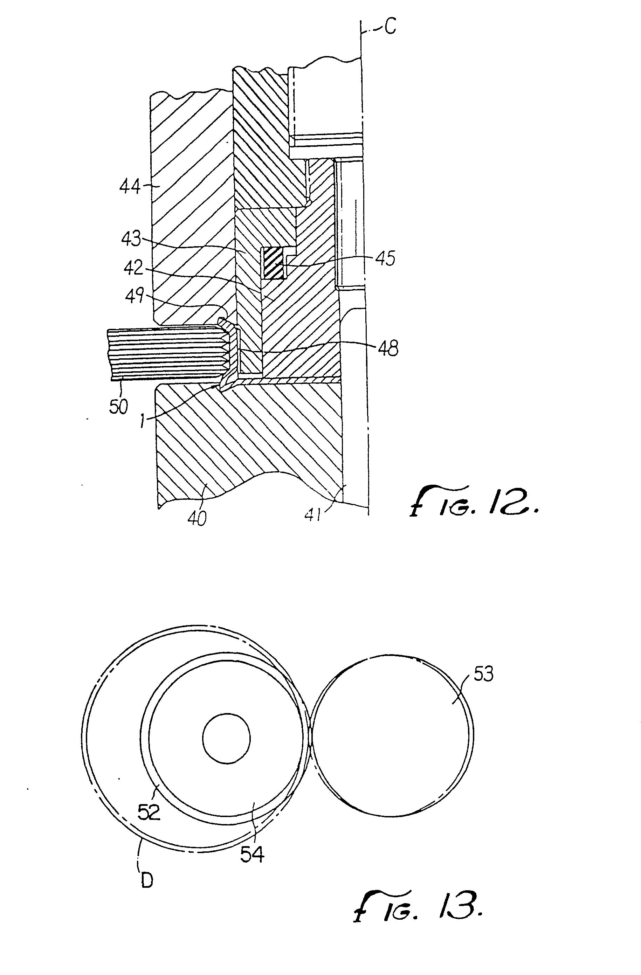

Therefore, the improvements provided by the present invention reside not in the above-described general shape but in methods of an apparatus for forming the pulley and in the preferred provision of many concaves 7 and convexes 8 on the inner peripheral portion at the back of the V grooves 2. These concaves and convexes are formed parallel to the axis A of the pulley, as shown in the end view of the pulley in Fig. 2, and they contribute to the improvement of the accuracy of the shape and dimensions of the V grooves. Further details of this feature will be described later.

A forming method according to the invention will now be described with reference to Figs. 3 to 6. The deep drawing step used to produce the cup-shaped bottomed cylinder blank or work piece 1 shown in Fig. 3 is already well known so it will not be described herein, but it should be noted that the outside diameter of the cylinder portion of the work piece 1 is almost equal to that of the flange portion 5 of the finished pulley shown in Fig. 1.

Fig. 4 shows a partially thickened shape of the cylindrical portion, as indicated at 10. A thickening operation of this type is normally difficult and can be effected by existing techniques only if the number of processing steps is increased. But an increase in the number of processing steps leads to an increase in cost, so it is unusual for such thickening as shown in Fig. 4 to be adopted for commercial production. It should be noted at this point that the present invention provides a method for performing this thickening operation in a single step.

Fig. 5 illustrates the piercing step for forming the central hole and bolt holes. This is conventional and detailed explanation will therefore be omitted.

Fig. 6 illustrates a rolling step in accordance with the present invention. One feature of this step resides in the fact that the work piece 1, which at the beginning is almost equal in outside diameter to the resultant flange portion 5, is V-grooved by rolling while being reduced in diameter down to the final diameter of the V groove portion, all in one step, thereby simplifying the entire process. Another feature resides in the fact that at the time of forming the V grooves by rolling, concaves and convexes are also formed as aforesaid on the inner peripheral portion opposite the V grooves, to improve the accuracy of the grooves.

An outline of the principles of the present invention having been provided above, the forming technique will be described below in more detail only with respect to the thickening step and the rolling step illustrated respectively in Figs. 4 and 6, since the other steps are conventional.

The thickening step of Fig. 4 will first be described. In this connection, reference is made to Fig. 7 which illustrates the principles of the thickening method and in which the numeral 1 indicates the work piece after completion of the deep drawing, as already illustrated in Fig. 3. A male die 11 and a knockout die 12 are movable downward, as seen in the Figure, while holding between them a bottom portion 16 of the (inverted) work piece 1. The lower edge, i.e. the rim, of the work piece 1 does not move because it is in abutment with a stepped portion 17 of a fixed die 14. Consequently, as the male die 11 and the knockout wall portion of the work piece 1 becomes smaller. A broken line 16a indicates the final position of the bottom portion 16, when it has completed its downward movement. A female die 13 is disposed above the cylindrical wall portion of the work piece 1 that is to be thickened, and a split die 15 which can increase its diameter is located below the female die, whereby the metal of the cylindrical wall portion, which is compressed or shortened by the downward movement of the dies 11 and 12, is permitted to expand into the space vacated by the split die 15. It is of importance in this connection that the split die 15 is urged inwardly at a predetermined level of pressure toward the center, to confine the metal. If this pressure is too weak, both the inner and outer peripheries of the cylindrical portion will bulge, that is, bulging will result rather than thickening. Thus, in order that thickening may be effected, it is necessary to precisely control the level of the said pressure.

The principle of the above thickening operation for various purposes is disclosed in Published Japanese Patent Application No. 215222/1984 published on 5th December 1984 and entitled "Method and Apparatus for Increasing the Wall Thickness of Thin-Walled Cylinder". Nevertheless, an explanation will be provided herein of specific apparatus for the application of such principle to the formation of a poly-V pulley, with particular reference to Figs. 8, 9 and 10. Fig. 8 is a sectional view of a thickening die, in which the left-hand side with respect to the center line B shows the condition before beginning the thickening operation, while the right-hand side shows the condition at the end of the operation. At the rightmost portion of Fig. 8 is illustrated the hydraulic controls for the split die 15, using conventional symbols of a hydraulic system. The functional operations will be successively described hereafter without describing in detail the fundamental die structures, as these will be readily understood by those skilled in the sheet metal working art.

At the beginning of the thickening operation, the work piece 1 is inserted and placed on the upper portion of the male die 11. At this time, the press ram is positioned at its top dead centre so that the die is largely open, and the male die 11 is held in a predetermined raised position by the means of a die cushion pin 18, so that the insertion of the work piece is easy. Then, the ram is brought down until the bottom portion 16 of the work piece 1 is held between the knockout die 12 and male die 11. At this time, the female die 13 fits around the outer periphery of the work piece 1 and places it under radial restraint. As the ram further descends, the lower surface of the female die 13 abuts on the upper surface of the split die 15 and stops. At this time, the lower edge of the work piece 1 is close to the stepped portion 17 of the fixed die 14. Further descent of the ram causes an elastic member 19 positioned above the female die 13 to be compressed and at the same time causes the knockout die 12 to move down until the lower edge of the work piece 1 comes into strong pressure contact with the stepped portion 17 of the fixed die 14.

In this condition, the bottom portion 16 of the work piece 1 is pressed by the die cushion pressure to prevent deformation of this portion, and the inner cylindrical surface of the work piece 1 is restrained by the male die 11, while the upper and lower portions of its outer cylindrical surface are restrained by the female die 13 and the fixed die 14, respectively. Consequently, a further descent of the ram causes the wall of the work piece 1 to expand outwardly into the space surrounded by the split die 15. At this time, if the split die 15 were not present, the cylindrical portion of the work piece 1 would bulge outwardly and the result would be the same as in a conventional bulging operation. In the present operation, however, the split die 15 holds the outer cylindrical surface of the work piece at a predetermined pressure to prevent bulging, while allowing the excess wall portion to expand outwardly. Thus the metal of the work piece 1 shifts to the thickened portion thereof by an amount corresponding to the amount of contraction caused by compression of the length of the cylindrical portion.

As already mentioned, in the above thickening operation the amount of pressure to be applied to the split die 15 is the inward direction is important. If this pressure is too low bulging will result as previously noted. At a too low pressure which is not sufficiently low to allow such bulging, corrugation will nevertheless occur. If the pressure is too high on the other hand, too large a force will be exerted on the die, thus causing breakage. This process is cold forging in which large forces act on the die, unlike sheet metal pressing operations such as drawings and bending. Therefore, it is necessary to accurately control the pressure on the split die 15, or there may occur problems such as breakage of the die and a poor quality of the resultant pulley. The control of the split die pressure will be described later.

The thickening operation is completed when the ram reaches its bottom dead center. Thereafter, the ram is raised for removal of the work piece 1, but before this operation it is necessary to relieve the pressure of the split die 15, as will now be described. As the ram goes up, the male die 11 also rises by virtue of the die cushion pressure. At this time, the female die 13 is urged down by the elastic member 19, but moves up at the same speed as the male die 11 and the work piece 1 because the diamter of the thickened portion of the work piece 1 is now larger than the inside diameter of die 13 and the die cushion pressure exerted through the pins 18 is larger than that applied by the elastic member 19. The split die 15 would also move up if pressure were to continue to be exerted thereon. However, this would not only be dangerous but it would also make it impossible to remove the work piece 1 because of the pressurized condition of the split die 15. Thus, it is necessary to remove the pressure on the die 15 upon starting the ascent of the ram. By so doing, the die 15 is held in the same position and the work piece 1 can be removed.

As the ram moves further up, a lower stepped portion of the male die 11 abuts a stepped portion 20 the fixed die 14 and the stroke of the die cushion below the cushion pin 18 now terminates, so that the male die 11 stops rising. Consequently, the ascent of the work piece 1 also stops and the female die 13 also stops in that position. Thereafter, the elastic member 19 expands with ascent of the ram until a stepped portion 21 of a guide ring 22 comes into engagement with an upper stepped portion of the female die 13, whereupon the female die 13 moves up together with the ram. Up until now, the upper part of the cylindrical wall portion of the work piece 1 has been held between the lower portion of the female die 13 and the male die 11, but as the female die 13 moves up even further, the work piece 1 goes with the female die 13 and is disengaged from the male die 11. It is not in fact always certain that the work piece 1 will disengage from the male die 11, but from experience it is highly probable that the work piece 1 will move up with the female die 13. If occasionally the work piece 1 still remains engaged with the male die 11 without moving up with the female die 13, then it is necessary to provide a kickout (not shown) within the male die for forcibly moving the work piece upwardly in engagement with the female die 13.

As the ram moves further upwardly to a point near its top dead centre, a kickout rod 23 pushes the knockout die 12 to disengage the work piece 1 from the female die 13.

As shown in Fig. 9, which is a sectional plan view of the split die 15 and its surrounding parts, with hatching being partially omitted, the split die 15 has a large number of segments so that the radial gaps therebetween will not be enlarged excessively with expansion of the outside diameter. Number 24 denotes a packing which surrounds the split die 15. The packing 24 has a cross-section as shown in Fig. 8 and its diameter expands or contracts according to the change in diameter of the split die 15. While this configuration is not ideal for imposing radial force and allowing movement, it is sufficient in practical use and affords a simple structure because the amount of expansion and contraction is small. Numeral 26 denotes a cylinder which has a structure resistant to high pressures. Between the packing 24 and the cylinder 26 is formed a high pressure chamber which receives oil pressure through a passage 27 as shown in Fig. 8. Triangular pieces 25 disposed on the outer periphery of the split die act to prevent the packing 24 from protruding into the gaps formed between the segments upon expansion of the die. As shown by phantom lines in Fig. 10, which is an enlarged view of a portion of Fig. 9, the die interior is thereby kept in a hermetically sealed condition even when a gap 27a is created upon exapnsion of the die.

In the above described thickening operation the split die 15 is pressurized toward the center, and as already mentioned this pressure must be accurately controlled. An example of means for achieving this control diagrammatically shown at the rightmost side of Fig. 8. A piston 28 and a cylinder 30 constitute an oil pressure source which performs a pumping action. As the upper die moves down, the piston 28 is thereby pushed downward by an arm 29 on the upper die, while when the upper die moves up the piston 28 is returned upwardly by means of a spring 31. The arm 29 is shown merely for the convenience of explanation and need not always present as the upper die could engage the piston directly.

When the arm 29 forces the piston 28 downwardly during descent of the press ram, oil which is present below the piston 28 passes through a passage 32 to the cylinder 26 and also to a check valve 33, a pressure regulating valve 34 and a two-way valve 35, whereby the split die 15 is moved inward in the radial direction. As the ram further descends, the split die 15 reaches the end of its inward movement just before the thickening of the work piece begins. The continued downward movement of arm 29 and piston 28 then produces increasing pressure in line 32. This high pressure causes the pressure regulating valve 34 to operate, so that the oil is returned to a tank 37 through a passage 36. As the ram further descends, the thickening of the work piece begins. From this point in time, the diameter of the split die 15 increases, so that the oil in the cylinder 26 flows back through the passage 32, joins the oil which is being forced out by the piston 28, and passes to the tank 37 by way of the pressure regulating valve 34. In this way, during thickening of the work piece 1, the pressure acting on the split die 15 is held at a predetermined level set by the pressure regulating valve 34.

Thereafter, as the ascending motion of the ram begins, the piston 28 also moves up, so that the pressure drops, but this pressure drop would not be very rapid because portions of the system are in an elastically deformed state. To overcome this factor, a solenoid valve 35 is arranged to be operated in time with the movement of the die and is disposed in the hydraulic system as shown in Fig. 8, whereby correct timing can be accomplished. During the return of the piston 28 with ascent of the ram, the check valve 33 opens and the oil from the tank 37 is drawn up into the cylinder 30 in preparation for the next cycle of operation.

It is to be understood that the split die 15 can be pressurized by various methods, only one example of which has been shown and described above. As another example, the die cushion attached to the press may be utilized, but this pressure is very large and exceeds the pressure required for the operation as the width of the thickened portion becomes large. In contrast, in the above-described embodiment utilizing oil pressure, equipment requirements and energy losses are kept to a minimum.

The rolling step of Fig. 6 will now be described. In Figs. 11 and 12, which illustrated the operational steps for rolling, the left-hand side with respect to a center line C in Fig. 11 shows the condition before the start of rolling, the right-hand side shows the completed state of rolling, and an intermediate state is shown in Fig. 12. An unique characteristic of this rolling step is that the work piece 1 before rolling has an outside diameter almost equal to that of the resultant flange portion 5 shown in Fig. 1 and is formed with V grooves while being reduced in diameter, while at the same time concaves and convexes are formed on the opposite side from the V grooves.

Referring now to Figs. 11 and 12, numeral 40 denotes a rotating table provided with a central guide pin 41. The illustrated state is obtained by placing the work piece 1 on the rotating table with the pin 41 extending through its central hole and then moving die members 42 and 47 down from their raised positions. Of the die members 42 to 47, a clamping die 42 first clamps the bottom portion of the work piece 1 to the table 40. The clamping die 42 is attached to a rotating shaft 47 through a holder 46 so that it can rotate while pressing down on the bottom portion of the work piece. A movable die 43 disposed outside of the clamping die 42 is slightly movable downwardly, but is held in a position defined by an elastic member 45, made of rubber for example. The movable die 43 is formed with an uneven, groove-forming, portion 48 in the lower portion thereof. A pressure die 44 which surrounds the movable die 43 can be pressurized during rotation. Reference numeral 50 denotes a pressure roll or rolling die which is axially movable and is urged upwardly by a spring 51.

In the condition just before starting the operation, and as illustrated on the left-hand side of Fig. 11, the pressure roll 50 is held in a predtermined position by the spring 51. The work piece 1 is clamped by the clamping die 42 between the latter and the rotating table 40. Further, the pressure die 44 engages and strongly presses on the edge or rim portion 49 of the work piece 1. In this condition the die members 42 to 47, the rotating table 40, the guide pin 41 and the work piece 1 are rotated together and the roll 50 is advanced laterally toward the rotational center. By so doing, first the outside diameter of the work piece 1 is reduced. Fig. 12 shows a condition in which the diameter of the V-groove portion has been reduced to form a flange portion at the free edge, while the inside surface of the cylindrical wall portion of the work piece has come into contact with the outer periphery of the movable die 43, so that axially extending grooves or concaves and convexes begin to form in this portion of the work piece. During the remainder of the V grooving operation, the concaves and convexes become deeper until the desired shape is obtained by the cold-working of the metal.

At this point in the forming process, there arises the following problem. According to experimental results, in the condition of Fig. 12 the inward flange portion (the portion indicated at 5 in Fig. 1) has not been completely formed. To complete the formation of this flange portion it is necesary that the cylindrical wall portion of the work piece 1 be moved further downward. The force for this movement is received from the pressure die 44, but as the inside surface of the cylindrical wall portion of the work piece is in tight engagement with the uneven, groove-forming, portion 48 of the movable die 43, if the movable die 43 does not also move then the pressure of the pressure die 44 does not readily cause movement downward, resulting in lack of uniformity in the vertical direction.

In order to solve this problem, in this embodiment of the present invention from the condition shown in Fig. 12 the movable die 43 starts moving downward while compressing the elastic member 45. At this time, the pressure of the elastic member 45 is much lower than that of the pressure die 44, so the influence of the pressure of this elastic member is negligible. In this way, the movable die 43 permits the rolling operation to be carried out while maintaining the pressure of the pressure die 44 as uniform as possible. However, where the number of V grooves is small, the movable die 43 may be omitted, leaving only the clamping die 42. At the end of the rolling operation, the movable die 43 is located at its lowermost position while compressing the elastic member 45, as shown at the right-hand side of Fig. 11.

As the roll 50 is returned to its original position from the condition shown on the right-hand side of Fig. 11, and the upper dies are pulled up, the work piece 1 follows them. In the final stage, the pressure die 44 is moved in the downward direction relative to the clamping die 42 and the movable die 43, whereby the rolled product is ejected. In this way, the formation of a poly-V pulley having concaves and convexes on the interior side of its cylindrical wall portion, as shown in Figs. 1 and 2, is completed.

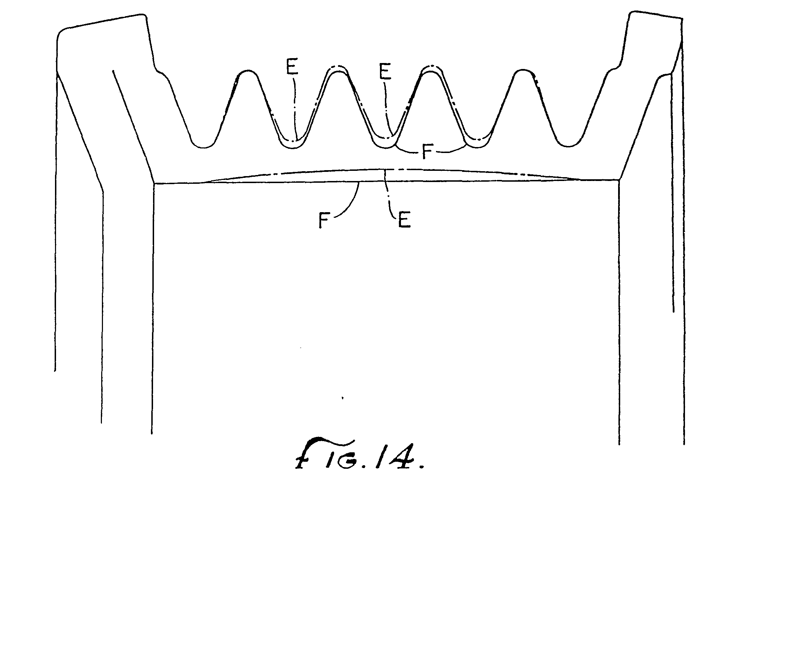

The importance of the concaves and convexes formed on the inside surface portion, at the back of V grooves, in improving the accuracy of formation of the grooves, will be explained with reference to Figs. 13 and 14. Consider a processing operation in which, as shown in the explanatory view of Fig. 13, a cylindrical work piece 52 of a narrow width is formed by cutting a pipe and is fitted around a core bar 54, whereupon the core bar is rotated while a plane roll 53 is engaged strongly with the cylindrical work piece 52 to cause plastic deformation of cold-working. This operation is obviously a rolling operation in which the diameter of the cylindrical work piece 52 increases as its wall becomes thinner, as shown by phantom line D. In contrast therewith, in the rolling of a poly-V pulley as above described, the diameter is restrained at the flange portion on each side of the V grooves, so in this vicinity the diameter cannot be changed by rolling. However, at the central portion, where this restraining force is weak, there is a natural tendency for the diameter to be increased by rolling. This condition is shown in Fig. 14, in which the solid lines F represent the designed shape, but what would actually be formed is indicated by the phantom lines E.

By forming concaves and convexes on the inside surface portion at the back of the V grooves, there are obtained the following effects. Firstly, the increase in diameter of the central portion is kept to a minimum because thinning in the rolling step is suppressed, and the angular accuracy is improved. Further, by the provision of such concaves and convexes, irregularity of the V groove shapes caused by an insufficient accuracy of the thickened rolled portion of the work piece is absorbed by the concaves and convexes. According to the results of tests actually conducted using the 5—V groove pulleys each having an outside diameter of 120mm, the maximum angular error was ±3° in the case of a conventional pulley free of concaves and convexes, while it was ±1° in the case of a pulley having concaves and convexes as above described. This means that the provision of such concaves and convexes is very effective. Since the above tests have been conducted for the purpose of comparison, it is believed possible to attain an even higher degree of accuracy by selecting improved rolling conditions and by making further improvements.

**Claims**

1. A poly-V pulley formed by plastic working of sheet metal, comprising a radially thickened cylindrical wall portion (10) having poly-V grooves (2) formed on the external surface thereof and grooves (7, 8) formed on the internal surface thereof opposite said poly-V grooves for causing forming and retention of the desired shape and dimensions of said poly-V grooves (2), characterised in that the said internal grooves (7, 8) are formed parallel to the axis (A) of the pulley and comprise a continuous series of grooves extending around the entire internal surface of the said wall portion.

2. A pulley as claimed in claim 1, characterised in that said internal grooves (7, 8) are a continuous series of convex and concave curves.

3. A pulley as claimed in claim 1 or 2, characterised in that outwardly extending flanges (4, 5) are formed on each axial end of said thickened cylindrical portion (10).

4. A method of forming a poly-V pulley from a substantially cup-shaped sheet metal work piece (1) of substantially uniform wall thickness having a cylindrical wall portion, comprising the steps of axially compressing the cylindrical wall portion while supporting the internal and external surfaces thereof to prevent buckling but allowing controlled radial expansion of at least one of such surfaces, to cold form a thickened portion (10) of the cylindrical wall portion, and then roll forming the thickened cylindrical wall portion to form poly-V grooves (2) on the external surface thereof and grooves (7, 8) on the internal surface, characterised in that said internal grooves (7, 8) are formed parallel to the axis (A) of the pulley and comprise a continuous series of grooves extending around the entire internal surface of the said wall portion.

5. A method as claimed in claim 4, characterised in that the roll forming step reduces the outside diameter of the thickened cylindrical wall portion (10).

6. A method as claimed in claim 4 or 5, characterised in that the roll forming step forms outwardly extending flanges (4, 5) on each axial end of the thickened cylindrical wall portion (10).

7. A method as claimed in any of claims 4 to 6, characterised in that the said controlled radial expansion is of the external surface only.

8. A method as claimed in any one of claims 4 to 7, characterised in that the roll forming step includes, in a continuous series of operations, first reducing the diameter of the thickened cylindrical wall (10) while forming an outward extending flange (4) on the free end of the cylindrical wall portion, next forming the poly-V grooves (2) and the internal grooves (7, 8), and then forming an outwardly extending flange (5) on the other end of the cylindrical wall portion.

9. A method as claimed in claim 4, characterised by the steps of subjecting the sheet metal to a deep drawing to form a bottomed cylinder (1) having an outside diameter almost equal to that of flange portions (4, 5) to be formed at both ends of the poly-V pulley upon finishing, placing under restraint all of the inner and outer peripheral surfaces of the cylinder portion of the bottomed cylinder and the inside and outside of the bottom portion thereof except for a central portion of the cylindrical portion which central portion is to be thickened, disposing a split die (15) at the portion to be thickened, said split die being capable of changing its diameter, shifting the sheet metal material to the portion to be thickened while compressing the cylindrical portion in the axial direction and while applying to the split die a pressure in the radial direction to such an extent as to avoid bending and bulging of the material, thereby forming a thickened portion (10), then clamping the bottom portion (16) of the bottomed cylinder thus formed with the thickened portion, rotating the cylinder while pressing end portions of the cylindrical portion strongly in the axial direction, pressing a processing roll (50) against the outside of the cylindrical portion, said processing roll being initially held in a predetermined position and then gradually moved in the axial direction, thereby reducing the diameter of the area of the cylindrical portion which is in pressure contact with said processing roll, forming said flange portions (4, 5) at both ends of the cylindrical portion, then bringing a movable die (43) having concaves and convexes (48) corresponding to the desired internal surface of the cylindrical portion into contact with said internal surface to form the said grooves (7, 8) thereon, and at the same time forming V grooves (2) on the external surface of the cylindrical portion by means of the processing roll (50).

10. Apparatus for forming a poly-V pulley from a cup-shaped sheet metal work piece (1) with bottom and cylindrical wall portion of substantially uniform thickness, comprising die means (11—15) for axially compressing the said cylindrical wall portion while confining both axial ends thereof so as to allow relatively uniform thickening of a central portion (10) of the cylindrical wall portion without buckling, a roll forming means having means (40) for engaging the bottom (16) and rotating the work piece, a rotatable processing roll (50) with a poly-V shape radially movable into engagement with the external surface of the thickened cylindrical wall portion (10) to form the poly-V grooves (2) therein, and an internal die (43) for forming grooves (7, 8) on the internal surface of the thickened cylindrical wall portion during the forming of the poly-V grooves by said processing roll, characterised in that the said internal die (43) is adapted to form said internal grooves (7, 8) parallel to the axis (A) of the pulley and as a continuous series of grooves extending around the entire internal surface of the said cylindrical wall portion.

11. Apparatus as claimed in claim 10, characterised in that said roll forming means includes die means (48, 49) for forming flanges (4, 5) on each axial end of the cylindrical wall portion (10).

12. Apparatus as claimed in claim 10 or 11, characterised in that said processing roll (50) is arranged to move axially during forming, to form a flange (5) on one end of the cylindrical wall portion (10).

13. Apparatus as claimed in claim 10, characterised by a split die (15) arranged to be disposed around the portion of the work piece to be thickened and means for restraining all portions of the work piece except the portion to be thickened, a movable die (12) for compressing the cylindrical wall portion of the work piece in the axial direction, a movable press ram for moving said movable die, an oil pressure source (28, 30) adapted to be operated by movement of said press ram (29) to perform a pumping action, an oil passage (32) extending from said oil pressure source to said split die (15), and control mechanism disposed in said oil passage whereby a pressure is applied to said split die in the radial direction under a high pressure control by virtue of oil pressure fed from said oil pressure source during compressing movement of said movable die and press ram and the pressure acting on the split die is relieved as the press ram reaches its bottom dead center.

**Patentansprüche**

1. Rolle mit einer Vielzahl von V-förmigen Nuten, die durch plastische Bearbeitung von Metallblech hergestellt ist, mit einem radial verdickten zylindrischen Wandteil (10), in dessen Aussenseite die V-förmigen Nuten (2) uasgebildet sind und an dessen Innenseite gegenüber den V-förmigen Nuten Nuten (7, 8) zur Ausformung und Erhaltung der gewünschten Form und Abmessungen der V-förmigen Nuten (2) ausgebildet sind, dadurch gekennzeichnet, daß die Innennuten (7, 8) parallel zur Rollenachse (A) ausgebildet sind und eine kintinuierliche Folge von auf der gesamten Innenseite des Wandteils verlaufenden Nuten umfassen.

2. Rolle nach Anspruch 1, dadurch gekennzeichnet, daß die Innennuten (7, 8) eine kontinuierliche Folge von konvexen und konkaven Kurven sind.

3. Rolle nach Anspruch 1 oder 2, dadurch gekennzeichnet, daß an den axialen Enden des verdickten zylindrischen Teils (10) nach außen gerichtete Flansche (4, 5) ausgebildet sind.

4. Verfahren zur Herstellung einer Rolle mit einer Vielzahl von V-förmigen Nuten aus einem kappenförmigen Metallblech-Werkstück (1) mit im wesentlichen gleichförmiger Wanddicke und einem zylindrischen Wandteil, bei dem der zylindrische Wandteil axial gepreßt wird, wobei dessen Innen- und Außenseite abgestützt werden, um eine Buckelbildung zu vermeiden und dabei kontrollierte radiale Ausdehnung wenigstens einer der Seiten zu ermöglichen, bei dem ein verdickter Teil (10) des zylindrischen Wandteils kalt ausgeformt wird und bei dem sodann der verdickte zylindrische Wandteil zur Bildung einer Vielzahl von V-förmigen Nuten (2) auf der Außenseite sowie von Nuten (7, 8) auf der Innenseite gewellt wird, dadurch gekennzeichnet, daß die Innennuten (7, 8) parallel zur Rollenachse (A) ausgebildet werden und eine kontinuierliche Folge von sich auf der gesamten Innenfläche des Wandteils verlaufenden Nuten umfassen.

5. Verfahren nach Anspruch 4, dadurch gekennzeichnet, daß durch die Wellung der Außendurchmesser des verdickten zylindrischen Wandteils (10) reduziert wird.

6. Verfahren nach Anspruch 4 oder 5, dadurch gekennzeichnet, daß bei der Wellung an den axialen Enden des verdickten zylindrischen Wandteils (10) nach außen gerichtete Flansche (4, 5) ausgebildet werden.

7. Verfahren nach den Ansprüchen 4 bis 6, dadurch gekennzeichnet, daß die kontrollierte radiale Ausdehnung lediglich an der Außenseite erfolgt.

8. Verfahren nach den Ansprüchen 4 bis 7, dadurch gekennzeichnet, daß die Wellung einen kontinuierlichen Ablauf folgender Vorgänge umfaßt: es wird zunächst der Durchmesser der verdickten zylindrischen Wand (10) reduziert, wobei ein nach außen gerichteter Flansch (4) am freien Ende des zylindrischen Teils ausgebildet wird, es werden sodann die V-förmigen Nuten (2) und die Innennuten (7, 8) ausgebildet und es wird sodann am anderen Ende des zylindrischen Wandteils ein nach außen gerichteter Flansch (5) ausgebildet.

9. Verfahren nach Anspruch 4, gekennzeichnet durch folgende Schritte: ein Metallblech wird zur Bildung eines mit einem Boden versehenen Zylinders (1) mit einem Durchmesser, der demjenigen der an beiden Enden der nach Fertigstellung mit den V-förmigen Nuten versehenen Rolle auszubildenden Flanschteile (4, 5) fast gleich ist, die Innen- und Außenumfangsseite des zylindrischen Teils des mit einem Boden versehenen Zylinders sowie die Innen- und Außenseite des Bodenteils mit Ausnahme eines zentralen zu verdickenden Teils des zylindrischen Teils werden eingespannt, an dem zu verdickenden Teil wird ein geteiltes Schneideisen (15) angeordnet, das seinen Durchmesser zu ändern vermag, das Metallblech wird zu dem zu verdickenden Teil verschoben, wobie der zylindrische Teil in Axialrichtung gepreßt und auf des Schneideisen in Axialrichtung ein solcher Druck Einwirkung gebracht wird, daß ein Verbiegen und Ausbeulen des Materials verhindert wird, wodurch der verdickte Teil (10) gebildet wird, es wird sodann das Bodenteil (16) des mit dem Boden versehenen Zylinders mit dem so ausgebilideten verdickten Teil verklemmt, der Zylinder wird gedreht, wobei die Endteile des zylindrischen Teils in Achsrichtung stark gepreßt werden, gegen die Außenseite des zylindrischen Teils wird eine Bearbeitungsrolle (50) gepreßt, die anfänglich in einer vorgegebenen Stellung gehalten und sodann graduell in Achsrichtung bewegt wird, wodurch der Druchmesser des Bereichs des zylindrischen Teils, der mit der Bearbeitungsrolle in Druckkontakt steht, reduziert wird, es werden an beiden Enden des zylindrischen Teils die Flanschteile (4, 5) ausgebildet, es wird sodann eine bewegliche Form (43) mit der gewünschten Innenseite des zylindrischen Teils entsprechenden konkaven und konvexen Bereichen (38) mit der Innenseite zur Bildung der Nuten (7, 8) in Kontakt gebracht und es werden gleichzeitig mittels der Bearbeitungsrolle (50) die V-förmigen Nuten (2) auf der Außenseite des zylindrischen Teils ausgebildet.

10. Vorrichtung zur Herstellung einer Rolle mit einer Vielzahl von V-förmigen Nuten aus einem kappenförmigen Metallblech-Werkstück (1), das ein Bodenteil und ein zylindrisches Wandteil im wesentlichen gleichförmiger Dicke aufweist, mit einer Formeinrichtung (11 bis 15) zum axialen Zusammenpressen des zylindrischen Wandteils, wobei dessen beide axiale Enden so festgehalten werden, daß eine relative gleichförmige Verdikkung eines zentralen Teils (10) des zylindrischen Wandteils ohne Buckelbildung möglich ist, mit einer Rollenformungseinrichtung, die eine mit dem Boden (16) in Eingriff tretende und das Werkstück drehende Anordnung (40) aufweist, mit einer drehbaren Bearbeitungsrolle (50), welche eine Mehrfach-V-Form aufweist und radial mit der Außenseite des verdickten zylindrischen Wandteils (10) in Eingriff bringbar ist, um die V-förmigen Nuten (2) in dem zylindrischen Wandteil auszubilden, und mit einer Innenform (43) zur Ausbildung von Nuten (7, 8) auf der Innenseite des verdickten zylindrischen Wandteils beim Ausbilden der V-förmigen Nuten durch die Bearbeitungsrolle dadurch gekennzeichnet, daß die Innenform (43) dazu dient, die Innennuten (7, 8) parallel zur Rollenachse (A) und als eine kontinuierliche Folge von auf der gesamten Innenfläche des zylindrischen Wandteils verläufenden Nuten auszubilden.

11. Vorrichtung nach Anspruch 10, dadurch gekennzeichnet, daß die Rollenformungseinrichtung eine Form (48, 49) zur Ausbildung von Flanschen (4, 5) an den axialen Enden des zylindrischen Wandteils (10) aufweist.

12. Vorrichtung nach Anspruch 10 oder 11, dadurch gekennzeichnet, daß die Verarbeitungsrolle (50) während des Formens axial bewgbar ist, um einen Flansch (5) an einem Ende des zylindrischen Wandteils (10) zu formen.

13. Vorrichtung nach Anspruch 10, gekennzeichnet durch ein geteiltes Shneideisen (15) das an dem zu verdickenden Teil des Werkstückes angesetzt wird, und durch eine Einrichtung zum Einspannen aller Teile des Werkstückes mit Ausnahme des zu verdickenden Teils, eine bewegliche Form (12) zum Zusammenpressen des zylindrischen Wandteils des Werkstücks in Achsrichtung, einen beweglichen Druckstempel zur Bewegung der beweglichen Form, eine Öldruckquelle (28, 30), die zur Ausführung einer Pumpwirkung durch die Bewegung des Preßstempels (29) betätigbar ist, eine von der Öldruckquelle zum geteilten Schneideisen (15), führenden Öldurchlaß (32) und einen im Öldurchlaß angeordneten Störmechansimus, wodurch aufgrund des von der Öldruckquelle gelieferten Öldrucks während der Kompressionsbewegung der beweglichen Form und des Preß-Stempels dem geteilten Schneidei-

sen in Radialrichtung ein Druck unter Hochdrucksteuerung zugeführt wird, und wobei der auf das geteilte Schneideisen wirkende Druck weggenommen wird, wenn der Druckstempel seinen unteren Totpunkt erreicht.

## Revendications

1. Poulie à gorges multiples en V formée par déformation d'une feuille métallique, comprenant une partie de paroi cylindrique (10) épaissie radialement et pourvue de gorges multiples en V (2) formées sur sa surface externe, et des rainures (7, 8) formées sur sa surface interne, opposées aux gorges multiples en V afin de provoquer le formage et la conservation de la forme et des dimensions désirées desdites gorges multiples en V (2), caractérisée en ce que lesdites rainures internes (7, 8) sont formées parallèlement à l'axe (A) de la poulie et constituent une série continue de rainures s'étendant tout autour de la surface interne de ladite partie de paroi.

2. Poulie suivant la revendication 1, caractérisée en ce que lesdites rainures internes (7, 8) sont une série continue de courbes convexes et concaves.

3. Poulie suivant la revendication 1 ou 2, caractérisée en ce que des flasques (4, 5) s'étendant vers l'extérieur sont formés à chaque extrémité axiale de ladite partie cylindrique épaissie (10).

4. Procédé pour le formage d'une poulie à gorges multiples en V à partir d'une pièce en feuille métallique (1) ayant à peu près la forme d'une tasse avec une épaisseur de paroi à peu près constante et pourvue d'une partie de paroi cylindrique, comprenant les phases consistant à comprimer axialement la portion de paroi cylindrique tout en supportant les surfaces interne et externe de celle-ci afin d'éviter son flambage, mais de permettre une expansion radiale commandée d'au moins une de telles surfaces, à façonner à froid une partie épaissie (10) de la partie de paroi cylindrique, et ensuite à façonner par laminage la partie de paroi cylindrique épaissie afin de former des gorges multiples en V (2) sur la surface externe de celle-ci et des rainures (7, 8) sur la surface interne, caractérisé en ce que les rainures internes (7, 8) sont formées parallèlement à l'axe (A) de la poulie et comprennent une série continue de rainures s'étendant tout autour de la surface interne de ladite partie de paroi.

5. Procédé suivant la revendication 4, caractérisé en ce que la phase consistant à façonner par laminage réduit le diamètre extérieur de la partie de paroi cylindrique épaissie (10).

6. Procédé suivant la revendication 4 ou 5, caractérisé en ce que la phase consistant à façonner par laminage forme des flasques (4, 5) s'étendant vers l'extérieur et disposés sur chacune des extrémités axiales de ladite partie de paroi cylindrique épaissie (10).

7. Procédé suivant l'une quelconque des revendications 4 à 6, caractérisé en ce que ladite expansion radiale commandée est réalisée uniquement sur la surface externe.

8. Procédé suivant l'une quelconque des revendications 4 à 7, caractérisé en ce que la phase consistant à façonner par laminage comprend, dans une série, continue d'opérations, une opération consistant à réduire d'abord le diamètre de la paroi cylindrique épaissie (10) lors du formage d'un flasque (4) s'étendant vers l'extérieur sur l'extrémité libre de la partie de paroi cylindrique, ensuite à former les gorges multiples en V (2) et les rainures internes (7, 8), et ensuite à former un flasque (5) s'étendant vers l'extérieur sur l'autre extrémité de la partie de paroi cylindrique.

9. Procédé suivant la revendication 4, caractérisé en ce qu'il comporte les phases consistant à soumettre la feuille métallique à un emboutissage profond afin de former un cylindre (1) pourvu d'un fond, le cylindre ayant un diamètre extérieur à peu près égal à celui des parties formant flasques (4, 5) devant être formés à chacune des extrémités de la poulie à gorges multiples en V lors de la finition, à mettre sous une force contraignante toutes les surfaces périphériques interne et externe de la partie cylindrique du cylindre ayant un fond ainsi que la face interne et la face externe de la partie formant fond de celui-ci sauf une partie centrale de la partie cylindrique, cette partie centrale devant être épaissie, à placer une matrice segmentée (15) à la partie qui doit être épaissie, le diamètre de ladite matrice segmentée pouvant être modifié, à déplacer de la matière de la feuille métallique vers la partie qui à épaissir tout en comprimant la partie cylindrique dans la direction axiale et tout en appliquant sur la matrice une pression dans la direction radiale jusqu'à une valeur permettant d'éviter de cintrer et de bomber la matière, de façon à former une partie épaissie (10), ensuite à serrer la partie formant fond (16) du cylindre ayant un fond ainsi formé avec une partie épaissie, à faire tourner le cylindre tout en pressant fortemant les parties d'extrémité de la partie cylindrique dans la direction axiale, à presser un rouleau de traitement (50) contre la face extérieure de la partie cylindrique, le rouleau de traitement étant d'abord maintenu dans une position prédéterminée et ensuite déplacé progressivement dans la direction axiale en réduisant le diamètre de la zone de la partie cylindrique qui se trouve en contact de pression avec le rouleau de traitement, à former lesdits parties formant flasques (4, 5) à l'une et l'autre des extrémités de la partie cylindrique, ensuite à déplacer une matrice mobile (43) ayant des surfaces concaves et convexes (48) correspondant à la surface interne désirée de la portion cylindrique de manière qu'elle vienne en contact avec ladite surface interne afin de former lesdites rainures (7, 8) sur celle-ci, et à former en même temps des gorges en V (2) sur la surface externe de la partie cylindrique à l'aide du rouleau de traitement (50).

10. Appareil de formage d'une poulie à gorges multiples en V à partir d'uen pièce (1) en feuille métallique ayant la forme d'une tasse, la pièce ayant des parties formant paroi de fond et paroi cylindrique d'une épaisseur à peu près constante, comprenant des moyens formant matrice (11 à 15) destinés à comprimer axialement ladite partie de paroi cylindrique tout en délimitant l'une et l'autre des extrémités axiales de celle-ci afin de permettre un épaississement relativement constant de la partie centrale (10) de la partie de paroi cylindrique, sans flambage, des moyens de façonnage par laminage comportant des moyens (40) destinés à venir au contact du fond (16) et à faire tourner la pièce, un rouleau de traitement rotatif (50) ayant une forme avec gorges multiples et étant déplaçable radialement pour coopérer avec la surface externe de la partie de paroi cylindrique épaissie (10) afin de former les gorges multiples en V (2) dans celle-ci, et une matrice intérieure (43) afin de former les rainures (7, 8) sur la surface interne de la partie de paroi cylindrique épaissie lors du formage des gorges multiples en V par ledit rouleau de traitement, caractérisé en ce que ladite matrice intérieure (43) est adaptée de façon à former lesdites rainures internes (7, 8) parallèlement à l'axe (A) de la poulie, sous forme d'une série continue de rainures s'étendant tout autour de la surface interne de ladite partie de paroi cylindrique.

11. Appareil suivant la revendication 10, caractérisé en ce que lesdits moyens de façonnage par laminage comportent des moyens (48, 49) pour le formage des flasques (4, 5) sur chacune des extrémités axiales de la partie de paroi cylindrique (10).

12. Appareil suivant la revendication 10 ou 11, caractérisé en ce que ledit rouleau de traitement (50) est agencé de façon à pouvoir être déplacé axialement lors du formage afin de former un flasque (5) sur l'une des extrémités de la partie de paroi cylindrique (10).

13. Appareil suivant la revendication 10, caractérisé en ce qu'il comporte une matrice segmentée (15) agencée de façon à être disposée autour de la partie de la pièce qui doit être épaissie, et des moyens destinés à maintenir toutes les parties de la pièce à traiter sauf la partie à épaissir, une matrice mobile (12) destinée à comprimer la partie de paroi cylindrique de la pièce dans la direction axiale, un coulisseau de presse mobile destiné à déplacer ladite matrice mobile, une source de pression d'huile (28, 30) adaptée de façon à être actionnée par le mouvement dudit coulisseau de presse (29) afin d'exécuter une action de pompage, un passage d'huile (32) s'étendant de ladite source de pression d'huile à ladite matrice segmentée (15), et un mécanisme de commande disposé dans ledit passage d'huile de façon qu'une pression soit appliquée à ladite matrice segmentée dans la direction radiale sous une commande de haute pression en raison de la pression de l'huile alimentée à partir de ladite source de pression d'huile pendant le mouvement de compression de la matrice mobile et du coulisseau de presse, la pression agissant sur la matrice segmentée étant réduite lorsque le coulisseau de presse atteint son point mort inférieur.

fig.1.

fig.2.

EP 0 156 567 B1

f̃IG.3.    f̃IG. 4.    f̃IG.5.    f̃IG.6.

FIG. 7.

FIG.8.

EP 0 156 567 B1

FIG. 9.

FIG. 10.

FIG. 11.

EP 0 156 567 B1

Fig. 12.

Fig. 13.

FIG.14.